# EUROPEAN PATENT SPECIFICATION

(11) **EP 3 197 294 B1**
(45) Date of publication and mention of the grant of the patent: **06.11.2019**
(21) Application number: 14902317.8
(22) Date of filing: 26.09.2014
(51) Int. Cl.: A23L 19/18, A47J 37/12, A23L 5/10

(54) **METHOD FOR CONTINUOUSLY MAKING KETTLE STYLE POTATO CHIPS**
VERFAHREN ZUR KONTINUIERLICHEN HERSTELLUNG VON KARTOFFELCHIPS VOM KETTLE-STIL
PROCÉDÉ POUR FABRIQUER EN CONTINU DES CHIPS DE POMME DE TERRE DE FABRICATION ARTISANALE

(43) Date of publication of application: 02.08.2017
(73) Proprietor: Frito-Lay North America, Inc., Plano, TX 75024 (US)
(72) Inventor: BAAS, Ian, Queensland 4109 (AU); BARRY, David Lawrence, Highland Village, TX 75077 (US)
(74) Representative: Jenkins, Peter David
(86) International application number: PCT/US2014/057591
(87) International publication number: WO 2016/048338

(56) References cited:
- WO-A1-2012/170523
- GB-A- 2 170 396
- US-A- 4 741 912
- US-A- 4 844 930
- US-A- 5 137 740
- US-B2- 7 303 777
- US-B2- 8 372 467
- US-B2- 8 808 779

## Description

### BACKGROUND OF THE INVENTION

### Technical Field

The present invention relates to an improved method for the production of potato chips and more particularly to an economic method for continuously making kettle style potato chips that are similar in taste and texture to those kettle style potato chips produced by a traditional batch process.

### Description of Related Art

Potato chips produced by batch processes in kettle fryers have texture and flavor characteristics that are usually recognized by consumers as being distinctly different from typical commercially produced continuous process potato chips. As the name implies, batch process kettle frying of potato chips involves placing a batch of potato slices in a kettle of hot oil, e.g., at a temperature of 300-310°F (150-160°C) and usually takes 10-13 minutes to complete.

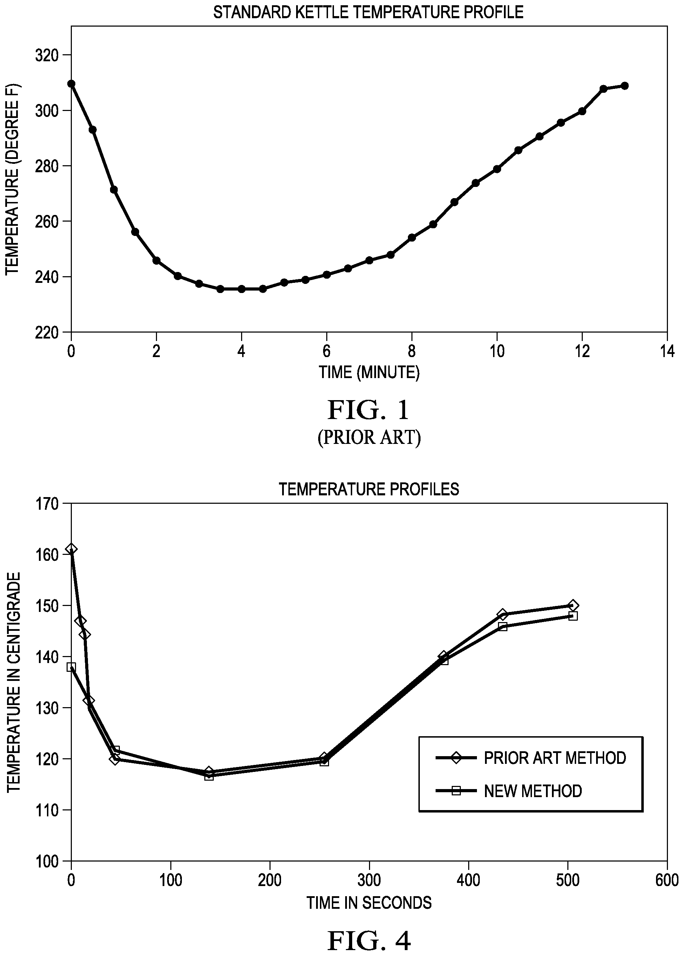

The typical U-shaped time/temperature profile of the cooking oil that has long been associated with the batch-wise production of kettle-style potato chips is illustrated in Figure 1. Kettle-style potato chips were produced according to the standard U-shaped time/temperature profile exemplified in Figure 1 in a conventional fry kettle having standard burners and no oil circulation system from potato slices (54.4kg (120 lbs)) of between 1.524mm and 2.286mm (0.060 and 0.090 inch) thickness. Upon introduction of the potato slices into an initial oil temperature of 310°F (154°C), the temperature of the oil typically drops quite rapidly by as much as 50°F (28°C) or more. As depicted by Figure 1, the oil temperature falls to a low point temperature of 235°F to 240°F (112.7°C to 115.6°C) for a low point time of 4 minutes. Heat to the kettle is then quickly increased and then the temperature of the oil begins to gradually rise, reaching about the initial frying temperature of 300°F (148.9°C). The resultant batch fried potato chip has a moisture content of between 1.5% to 1.8% by weight, and is generally harder and crunchier than typical continuously fried commercial chips. It has long been believed in the art that the U-shaped temperature-time profile is responsible for the unique mouth feel and flavor characteristics of kettle-style potato chips. Thus, continuous methods for the production of kettle-style chips seek to mimic the U-shaped temperature-time profile shown in Figure 1.

Production rates using batch kettle fryers are dependent upon the equipment used. The modern kettles that are utilized in batch processes are generally manufactured of stainless steel, and vary in size and capacity. The kettles typically are heated by gas burners positioned directly under the kettle floor. Fryer capacities range from as few as 27.2 kg (60 pounds) per hour to up to 226.8 kg (500 pounds) per hour (finished product basis), although most batch fry operations have kettle fryers that can manufacture between 68 kg and 181.4 kg (150 and 400 pounds) of chips per hour. In order to efficiently use a batch kettle fryer of a given size, it is necessary to maintain a particular "load" or amount of potato slices per volume of oil, in order to produce the desired U-shaped temperature-time profile. These and other constraints provide limits on the amount of throughput using batch kettle fryers. By contrast, potato chips made by a continuous process can employ continuous fryers capable of producing 453.6 kg to 2,268 kg (1,000 to 5,000 pounds) per hour of finished product. A number of methods have thus been proposed for continuous production of kettle-style potato chips without diminishing the desired hard bite texture and flavor.

U.S. Pat. No. 4,741,912 to Katz discloses a continuous process for frying potato chips having the characteristics of batch type frying, using two or three isothermal frying zones. While a multizone fryer is disclosed as an alternative construction, a series of fryers is used in Katz in order to have separate isothermal temperatures because it is not possible to maintain two or three significantly different isothermal temperature zones in the same body of oil while moving the chips continuously throughout. Moreover, Katz discusses a very tiny temperature drop between frying stages. Because this small temperature drop is not possible in a multizone fryer, Katz uses separate isothermal stages or fryers, each of which having its own pump and its own heat exchanger. These multiple fryers and multiple frying stages slow down the continuous process significantly, add complexity to the system, and increase its costs.

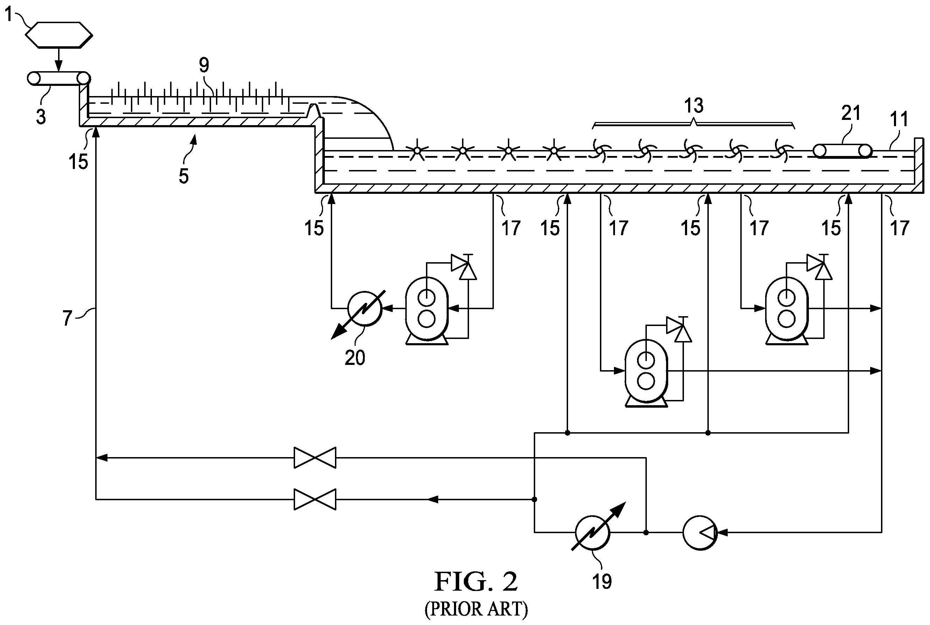

US Patent No. 7,303,777 discloses a method for continuously making kettle style potato chips by using cooling oil to help achieve the U-shaped temperature-time profile of potato chips cooked in the traditional batch process. Figure 2 is a schematic representation of the apparatus used for making kettle style potato chips disclosed in US 7,303,777. The apparatus of Figure 2 includes a slicer 1 for slicing potatoes, which are preferably not washed or rinsed prior to entering hot oil in the flume 5. The potato slices are dropped onto a belt 3 to achieve a monolayer and then fed into the upstream end of the oil flume 5 in a substantially monolayer arrangement to prevent sticking of the potato slices. The slicing onto the belt 3 such that singulated and monolayer slices are presented to the flume ensures minimal clustering and uniform exposure of all slices to the hot oil, thus minimizing potential for soft center formation. Heating oil enters the upstream portion of the flume 5 at the first oil inlet 7 at a flume oil temperature of between 148°C (300°F) and 160°C (320°F). The potato slice is in the flume for a residence time of about 15 to about 20 seconds. The flume 5 may be agitated with agitating means 9, which may include oscillating finger paddles (paddles that travel back-and-forth much like a clock pendulum), rotating finger paddles, drum paddles, dunkers, and/or rotating paddle wheels, to ensure slice separation. The potato slices are next routed to an upstream portion of a fryer 11 where the potato slices achieve a low point temperature of 230°F to 260°F (about 110°C to 126.7°C) for a low temperature residence time of between 3 minutes to 4 minutes. Due to the decreased volume of the flume 5 and the fast flash-off of surface water from the potato slices, the oil temperature rapidly drops to a low point temperature in the upstream portion of the main fryer 11. This is also achieved in part from a hot oil cooler 20 that circulates oil from a single outlet 17 at the end of the first zone of the fryer. The potato slices are then further cooked in the remaining portion of the fryer where the temperature of the hot oil in the fryer increases as the potato slices move further downstream. Paddles 13 may be used to help hold down the product during frying. Various inlets 15 and outlets 17 help control the temperature with the help of a main heat exchanger 19 to mimic the desired U-shape temperature profile of batch-made kettle chips.

A need exists for a more economical apparatus and method for continuously making kettle-style potato chips. The method would further benefit from elimination of the need to mimic the U-shaped temperature time profile thought to be necessary to achieve the desired kettle-style texture and taste.

US4,844,930 discloses a low temperature continuous frying process which is used to make potato chips which are similar in taste and texture to those produced by the slow-cooked batch or kettle process.

US5,137,740 discloses a cooking process for cooking food products in a continuous manner whereby the moisture formed during the process of cooking is removed from the cooking oil and the time-temperature profile within the cooker along the cooking path may be adapted to substantially conform to a linear or non-linear curve.

WO2012/170523 discloses a method for reducing the oil content of a potato chip.

GB2170396 discloses a cooking apparatus for cooking food products in a continuous manner whereby the moisture formed during the process of cooking is purged from the cooking oil and the time-temperature profile along the cooking path substantially conforms to a curve having at least one change in sign of slope.

US8,372,467 discloses a potato chip cooking process which includes controlled cooking of potato slices from the initial to the final cooking stages.

US8,808,779 discloses a method which reduces the oil content of a potato chip.

US7,303,777 discloses a continuous cooking process that mimics the U-shaped temperature-time profile produced by a batch kettle fried potato chip operation.

US4,741,912 discloses a continuous process for frying potato chips to produce a darker crunchy chip having the characteristics of batch type frying, said process using substantially isothermal frying zones.

### SUMMARY OF THE INVENTION

The present invention provides a more cost-effective and space-saving method for continuously making kettle style potato chips that simulates a hard-bite kettle-style potato chip similar to that produced in a traditional batch process. The instant invention, by eliminating the monolayer slicing arrangement and hot oil flume, further eliminates the need for the U-shaped temperature-time profile, which up until now was believed necessary for mimicking the texture and taste of the kettle-style potato chip.

The present invention provides a method for continuously making kettle style potato chips according to claim 1. Optional features are set out in the dependent claims.

In one embodiment, potato slices are directly placed into a first zone of a single continuous main fryer having multiple frying temperatures but no flume and without regard to any particular mono-layering equipment. Cool oil is drawn from the end of the third zone of the continuous fryer and combined with oil streams exiting from the second zone of the fryer this combined stream of cool oil being then passed through the oil cooler. Thereafter, an additional stream of oil from the end of the first zone of the fryer is combined with the cooled oil from the oil cooler before entering at the most upstream portion of the fryer. In this way, a temperature lower than that previously obtained by prior methods is achieved and which deviates from the typical U-shaped time-temperature profile. By using these cool oil streams the oil cooler requires less cooling water and less energy.

The potato slices thus achieve a low point temperature of 112°C (234°F) to 118°C (244°F) for a low temperature residence time of between 1 minute to 3 minutes within the first frying zone. The potato slices are then further cooked in the remaining portion of the fryer where the temperature of the hot oil in the fryer increases as the potato slices move further downstream. Without any flume portion, the present invention provides a more economical apparatus and method for continuously making kettle-style potato chips by a continuous method having desirable hard-bite texture and taste properties.

### BRIEF DESCRIPTION OF THE DRAWINGS

The novel features believed characteristic of the invention are set forth in the appended claims. The invention itself, however, as well as a preferred mode of use, further objectives and advantages thereof, will be best understood by reference to the following detailed description of illustrative embodiments when read in conjunction with the accompanying drawings, wherein:
**Figure 1** depicts the standard temperature profile resulting from the batch-wise production of kettle-style potato chips.
**Figure 2** is a schematic representation of a prior art apparatus used for continuously making kettle style potato chips.
**Figure 3** is a schematic representation of the apparatus used for making kettle style potato chips in one embodiment of the present invention.
**Figure 4** is a graph depicting the temperature profiles resulting from the continuous process depicted in **Figure 2** in contrast to that resulting from the apparatus of **Figure 3****.**

### DETAILED DESCRIPTION OF THE INVENTION

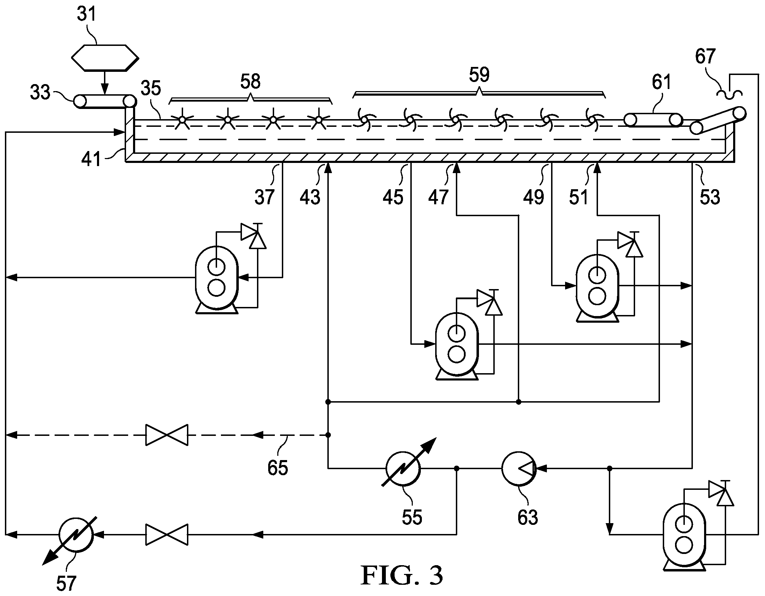

An embodiment of the invention will now be described with reference to Figures 3 and 4. The same reference numerals are used to identify the same corresponding elements throughout all drawings unless otherwise noted.

Figure 3 is a schematic representation of the apparatus used for making kettle style potato chips continuously in a continuous fryer without a flume in one embodiment of the present invention. The apparatus includes a slicer 31 for slicing peeled potatoes. By way of example, the potatoes may be sliced to a thickness of between 0.058 inches (1.47 mm) to 0.064 inches (1.63mm) using an Urschel variable thickness slicer 31. The slices are unwashed (i.e., not rinsed) prior to entering into the main fryer in one embodiment; however, the slices may also be washed in another embodiment. The potato slices are then dropped onto a belt or vibratory pan 33 without regard to monolayer arrangement. That is, a plurality of potato slices are dropped onto the belt or vibratory pan 33 in an unorganized or random arrangement after slicing, and then transferred directly into a main fryer 35 with no flume portion. As used herein, the terms "main fryer," "fryer," or "continuous fryer" are used interchangeably and are meant to refer to a single, continuous, multizone fryer having a consistent and single depth and no flume. In one embodiment, the single oil depth of the continuous multizone fryer is 180 mm, or 7.1 inches.

The main fryer comprises at least three different zones of temperature within the fryer. At introductory of the slices, the continuous fryer comprises a first zone having rotating and reversing finger paddles 58 with an initial oil temperature of between 135°C and 148°C (275°F and 298.4°F). In one embodiment, the initial oil temperature is 139°C (282.2°F). To maintain the temperature profile of the first zone, portions of cool zone outlet oil from the main fryer are circulated through oil pump 63 and directed through a cooling heat exchanger or oil cooler 57. More specifically, as depicted in Figure 3, oil removed from outlets 45, 49, 53 are combined and directed to pump 63 prior to further cooling through the oil cooler 57. The cooled oil is then mixed with oil removed from the first outlet 37 of the fryer with the resulting mix being then injected into the first oil inlet 41 of the fryer. Oil from the first outlet 37 helps further cool the oil in light of the decreased temperature at 37, which is due to product load. In one embodiment, the oil from the pump 63 enters the oil cooler 57 at a temperature between 135°C (275°F) and 145°C (293°F). After mixing with the oil from outlet 37, the oil is injected into the first inlet 41 at a temperature of between 130°C (266°F) and 140°C (284°F). Varied textures can be produced by either additional cooling to make the product harder or through addition of heating oil to the mix. Thus, optionally, heating oil may come from the heater 55 or from a supplemental heat exchanger. In one embodiment, the heating oil may enter the mix at a temperature of between 165°C (329°F) and 175°C (347°F). Potato slices remain in the first zone of the fryer, defined as the initial temperature drop area in the fryer until the first outlet 37 of the fryer, or the upstream portion of the fryer, for at least 1 minute but no more than 4 minutes before passing into a second zone of the fryer. In one embodiment, the frying time within the first zone is between 1 to 3 minutes before passing into a second zone of the main fryer. In accordance with the invention, the frying time of the first zone may be between 90 to 120 seconds. At the exit or end of the first zone, the main fryer comprises a first zone exit oil temperature of between 110°C (230°F) and 122°C (251.6°F). In one embodiment, the first zone exit oil temperature is between 114°C (237.2°F) and 122°C (251.6°F). In one embodiment, the first zone exit oil temperature is 116°C (240.8°F).

As used herein, the second zone of the main fryer 35 is defined as the general area between the second inlet 43 and the third outlet 49. The second zone comprises paddles to continuously convey the slices through the second zone and to the third zone, which is beneath a hold down conveyor, further described below. Any type of paddles or rotating wheels or dunkers 59 can be used to continuously convey the slices through the main fryer 35. The heated hot oil of the second zone is within a temperature range of 130°C (266°F) to 150°C (302°F). This second zone temperature is controlled within the desired range by both removal of a portion of cool oil and by injecting heated oil into the second zone downstream from the first zone at a temperature of 160°C (320°F) to 180°C (356°F). After entering the second zone, potato slices will be conveyed throughout this zone and remain therein for 2 to 4 minutes before passing downstream to a third zone of the continuous fryer.

A hold-down conveyor or submerger 61 helps submerge and convey potato slices throughout a third zone of re-heated hot oil as the potato slices are dehydrated to a moisture content of less than 2% and more preferably less than 1.5%. According to the invention, the potato slices are fried in the third zone under the submerger at a temperature of between 140°C to 160°C until a potato slice exit moisture content of 1.0 % to 2.0 % is achieved. The speed of the paddles 59 or submerging conveyor 61 can be varied to increase or decrease the dwell time of the potato slices in the fryer. Both the submerging conveyor 61 speed and the inlet temperature 51 may be automatically varied by smart controls software to achieve an outlet moisture content of about 1.5%, for example. To achieve the desired moisture content, a portion of the cool oil is removed at the end of the second zone and heated oil at a temperature of 160°C (320°F) to 180°C (356°F) is injected into the third zone to achieve a zone temperature of between 140°C (284°F) and 160°C (320°F). At the end of the third zone, an endless take out conveyor removes the finish-fried potato chips from the fryer 35. The total dwell time of the potato slices after exiting the slicer 31 to their removal from the main fryer 35 is between 7 to 9 minutes. In one embodiment, the total dwell time is between 7 to 8 minutes. In one embodiment, the total dwell time is 7 minutes. In one embodiment, the total dwell time is 8 minutes. In one embodiment, the total dwell time is 9 minutes. The oil content of the potato chips made by the above-described process is between 20% to 25% by weight, which can be lower than a kettle-style chip made in a traditional process. If desired, oil may be added to the chips upon exit to mimic the typical oil content in a traditional kettle-style potato chip. In one embodiment, an oil curtain is added prior to measurement of the potato slice moisture content.

Thus, as shown above, the method for continuously making kettle style potato chips in a continuous fryer with no flume comprises the steps of: placing a plurality of potato slices directly after slicing into an upstream portion of a first zone of the continuous fryer in random order and at an initial oil temperature of between 135°C and 148°C, wherein the continuous fryer (35) is a single, continuous, multizone fryer having a consistent and single oil depth, and an oil cooler (57) draws oil from multiple outlets (45, 49, 53) throughout the fryer to control the first zone temperature;
frying the potato slices in said first zone for between 1 to 3 minutes before passing into a second zone of the continuous fryer (35), wherein the first zone comprises a first zone exit oil temperature of between 110°C and 122°C;
injecting heated oil into the second zone downstream from the first zone of the continuous fryer (35) and frying the potato slices within the second zone at a second zone temperature of between 130°C to 150°C for 2 to 4 minutes before the potato slices pass downstream from the second zone into a third zone of the continuous fryer (35); and
injecting heated oil into the third zone downstream from the second zone and frying the potato slices in the third zone under a submerger (61) at a temperature of between 140°C to 160°C until a potato slice exit moisture content of 1.0% to 2.0% is achieved. The heated oil injected into the second and third zone may comprise a temperature of from 160°C (320°F) to 180°C (356°F). Table 1 below illustrates certain embodiments that may be used to produce specific textures.

**Table 1. Texture Resulting from different oil temperatures and frying times**

| **Kettle Texture** | **Inlet oil temperature (°C)** | **Cold zone oil temperature (°C)** | **Outlet oil temperature (°C)** | **Total Dwell Time in Fryer (min)** |
|---|---|---|---|---|
| Softer | 145-148 | 120-122 | 144-148 | 7.0-7.5 |
| Standard | 138-140 | 115-117 | 142-146 | 8.0-9.0 |
| Harder | 134-138 | 114-116 | 142-146 | 10.0-11.0 |

In continuously producing the hard-bite kettle-style potato chip in the multizone fryer, a low point temperature and a low temperature residence time must be achieved. As used herein, low temperature residence time is defined as the approximate amount of time it takes a potato slice to travel from the first zone of the main fryer to the approximate location in the fryer where the fryer oil temperature begins to increase, generally at entry to the second inlet 43. As used herein, the low point temperature is defined as the temperature range that is within 10°C (18°F) of the lowest oil temperature measured in the first zone of the fryer, which is 110°C (230°F) to 120°C (248°F). The low point temperature and low temperature residence time can be better controlled particularly with changing mass rate of slices by controlling the oil temperature into the inlet 41 through the use of the oil cooler 57.

Figure 4 depicts the temperature profile of both the prior art method of Figure 2 and the improved method described herein in relation to Figure 3. The water evaporating from the slices provides the final dip in the curve of the improved method described herein. As depicted in Figure 4, the dip for the improved method is less than the prior art version and it is clear the improved version starts at a much lower temperature than previously thought necessary. The oil from the oil cooler allows precise control of the bottom of the temperature curve as the product evaporation cooling is variable with the load of potato slices, and amount of water in the potato slices.

Heat throughout the continuous main fryer 35 can be controlled with a number of outlets and inlets throughout the main fryer 35, which help circulate the frying oil therein through heating oil and cooling oil exchangers. In one embodiment, hot oil from pump 63 is cooled in a oil cooler 57 to a temperature of between 135°C (275°F) to 145°C (293°F) before being blended with oil from outlet 37 and routed to a first inlet 41 in the upstream portion of the fryer, or the beginning of the first frying zone. In one embodiment, the hot oil exits the oil cooler 57 at 600 liters/minute. The optimal temperature or temperature range of cooled oil exiting the oil cooler 57 and being blended prior to entering the first inlet 41 can be determined based upon product flow (e.g., kilograms per hour of potato slices in the fryer) and oil from the first outlet 37. Use of an oil cooler 57 enables the potato slices to achieve a low point temperature of between 110°C (230°F) to 120°C (248°F) for a low temperature residence time of between about 1-3 minutes in the first frying zone. The oil cooler 57 can use cooling water or any other desirable fluid as the cooling medium. The cool oil from the oil cooler 57 can ensure that the desired low point temperature is reached for the desired low temperature residence time before heated oil is added to elevate the temperature in the main fryer to further dehydrate the potato slices.

Once the potato slices have reached the desired low point temperature for the desired low temperature residence time, the oil in the remaining portion of the fryer 35 is re-heated to finish fry the slices to a moisture content of 1-2%. Thus, the temperature in the remaining portion 35 of the fryer increases as the potato slices move downstream. As used herein, the remaining portion of the fryer 35 includes the second and third zones and is defined as the area generally downstream of the second inlet 43. This re-heating can be efficiently achieved by draining a portion of the cooler fryer oil through a plurality of oil outlets 45, 49, 53 while also adding heated hot oil to the fryer through a plurality of inlets 43, 47, 51. In one embodiment, oil inlets are placed downstream of oil outlets to remove a portion of cooled oil and introduce hot oil such that the new fryer temperature will increase. Removal of cool oil lessens the total oil volume that is re-heated. While Figure 3 depicts only several inlets and outlets, it should be noted that additional inlets and/or outlets can be used to control the temperature of the cooking oil as recognizable to those skilled in the art. Further, the inlet temperatures can be varied by manipulating the outlet temperatures of the heat exchangers, including the main heat exchanger 55, the cooling heat exchanger 57, and any optional trim heat exchanger, for example. In one embodiment, the main heat exchanger 55 and any optional trim heat exchanger (not depicted) may use steam as a heating medium. In one embodiment, a gas heating exchanger may be used as a heating medium. In one embodiment, the main heat exchanger 55 has an exit oil temperature of between 170°C to 190°C (338°F to 374°F). Such a temperature can increase the driving force to better enable the reheating of the oil in the fryer subsequent to the low point temperature. The inlet oil temperatures can also be controlled by mixing cooling oil including, but not limited, to, fresh oil at ambient temperatures, oil exiting the oil cooler 57, or from a bypass line that by-passes the heat exchanger 55 with the heated oil exiting the heat exchanger 55. The potato slices are dehydrated to a potato slice exit moisture content of below 2%, and more preferably below 1.5% by weight. As used herein, the potato slice exit moisture content is defined as the moisture content of the potato slices after exiting the fryer. Optionally, at least one of the oil inlet 43, 47, 51 temperatures are adjusted based upon the outlet moisture content of the potato slices as measured by a moisture measuring device situated in proximity of an outlet endless conveyor belt, similar to that depicted in Figure 2. A model FL710, available from NDC Infrared Engineering, of Irwindale, CA can be used for a moisture measuring device. Similar to the apparatus of Figure 2, the oil flow, oil temperature, and submerger speed can be varied, either independently or in combination, to control the potato slice exit moisture content.

Prior to this discovery, it was believed that a typical U-shaped temperature profile such as that of Figure 1 was necessary to achieve desirable kettle-style potato chips. Figure 4, however, depicts that the temperature profile of the improved continuous kettle fry process of the present invention mimics more of a J-curve, starting at a lower temperature without the frying step through a flume and in random order; that is, without regard for the monolayer arrangement. As shown in Figure 4, the prior art process mimics the U-shaped profile of Figure 1. This was achieved with the aid of the flume portion of the fryer together with the organized single layer arrangement of slices. A monolayer arrangement also helped minimize clusters and was believed necessary to avoid soft centers and ensure thorough frying in the finished product for shelf stability. However, using the present apparatus and method, the temperature profile no longer needs to mimic the U-shape; rather it is more of a J-shape used to arrive at a similar batch-style kettle chips. One advantage of the present invention is that an expensive flume design or monolayer arrangement is no longer necessary, saving time, space, and costs while arriving at the same desirable product. Less heat is also required due to the absence of a flume. In addition, the arrangement wherein the oil cooler 57 is used with combined portions of oil removed throughout the fryer requires less cooling water and provides for energy reduction.

The following is a specific example of one embodiment of the invention. Approximately 1800 kg per hour of unwashed sliced potatoes (corresponding to approximately 500 kg per hour of finished product) were sliced to a thickness of 1.55mm onto a flat wire belt and then dropped directly into the main fryer. Hot oil from the fryer outlet at 145°C (293°F) was cooled and combined with oil from the first outlet 37 to provide a total flow of 930 liters per minute at a temperature of 141°C (286°F) that was then pumped into the main fryer inlet. The potato slices were conveyed through the first zone and agitated by rotating finger paddles that ran in both forwards and backwards directions in the first zone. The potato slices had a residence time of approximately 90 to 120 seconds in the first zone with an oil temperature at the exit of the first zone of 114°C (237°F). The potato slices then fed into the second zone of the main fryer where 320 liters per minute of hot oil from the heat exchanger at 184°C (363.2°F) was added to the main fryer. About halfway through the second zone, 235 liters per minute of oil was removed from the main fryer and 360 liters per minute of hot oil from the heat exchanger at 175°C (347°F) was added to the main fryer. At the end of the second zone, 215 liters per minute of oil was removed from the main fryer and 260 liters per minute of hot oil from the heat exchanger at 175°C (347°F) was added to the main fryer. The potato slices were controlled and dunked by standard rotating paddles similar to those found in regular potato chip fryers as they were conveyed for about 2 to 2.5 minutes through the second zone. The potato slices then fed into the third zone of the main fryer where they were submerged in the oil by a hold down belt (sometimes referred to as a submerger) for between 3 to 4 minutes. The finished potato chips exited the third zone onto a wire mesh conveyor that removed them from the main fryer while the oil at the end of the main fryer exits at 145°C (293°F) to a fines removal device from which a portion is sent to the oil cooler and a portion is sent to the oil heater. 500 kg per hour of finished potato chip product having kettle-style taste and texture was achieved. The resultant finished potato chip product had a moisture content of 1.5 percent by weight and an oil content of 23% to 24% by weight. The resultant finished potato chip product was evaluated by an expert panel to have typical kettle chip flavor, texture and appearance.

## Claims

1. A method for continuously making kettle style potato chips in a continuous fryer (35) with no flume comprising the steps of:
placing a plurality of potato slices directly after slicing into an upstream portion of a first zone of the continuous fryer in random order and at an initial oil temperature of between 135°C and 148°C, wherein the continuous fryer (35) is a single, continuous, multizone fryer having a consistent and single oil depth, and wherein an oil cooler (57) draws oil from multiple outlets (45, 49, 53) throughout the continuous fryer (35) to control the first zone temperature;
frying the potato slices in said first zone for between 1 to 3 minutes before passing into a second zone of the continuous fryer (35), wherein the first zone comprises a first zone exit oil temperature of between 110°C and 122°C;
injecting heated oil into the second zone downstream from the first zone of the continuous fryer (35) and frying the potato slices within the second zone at a second zone temperature of between 130°C to 150°C for 2 to 4 minutes before the potato slices pass downstream from the second zone into a third zone of the continuous fryer (35); and
injecting heated oil into the third zone downstream from the second zone and frying the potato slices in the third zone under a submerger (61) at a temperature of between 140°C to 160°C until a potato slice exit moisture content of 1.0% to 2.0% is achieved.

2. The method of claim 1, wherein the heating oil of the third zone exits the continuous fryer (35) at a third zone exit temperature of between 145°C and 150°C.

3. The method of claim 1, comprising a second zone temperature of 140°C.

4. The method of claim 1, wherein the oil cooler (57) draws oil from a downstream end of the third zone and an outlet (49) of the second zone to make a combined cooled oil and wherein the combined cooled oil is combined with an oil stream from a downstream end of an outlet (37) of the first zone before being injected back into the upstream portion of the first zone, optionally wherein the oil cooler (57) draws oil from a second outlet (49) of the second zone to make the combined cooled oil prior to combination with the oil stream from the downstream end of the outlet (37) of the first zone.

5. The method of claim 1, wherein the initial oil temperature of the first zone results from a combination of hot oil from a fryer outlet of the continuous fryer (35) and hot oil from a heat exchanger.

6. The method of claim 1, wherein the initial oil temperature of the first zone is 139°C.

7. The method of claim 1, wherein the first zone exit oil temperature is between 114°C and 122°C, optionally wherein the first zone exit oil temperature is 116°C.

8. The method of claim 1, wherein the potato slices are fried in the first zone for a period of time from between 1 to 1.5 minutes.

9. The method of claim 1, wherein oil is removed from an exit port of the second zone and hot oil is introduced along an entry port in the second zone of the continuous fryer (35).

10. The method of claim 1, wherein the potato slices fry within the second zone for between 2 to 2.5 minutes.

11. The method of claim 1, wherein the potato slices fry within the third zone for between 1.5 to 4.0 minutes, optionally 1.5 minutes to 2.5 minutes.

12. The method of claim 1, wherein the total dwell time of the potato slices in the continuous fryer is 7.0 minutes, optionally 8.0 minutes, further optionally 9.0 minutes, yet further optionally 10.0 to 11.0 minutes.

13. The method of claim 1, wherein a potato slice exit moisture content of 1.5% is achieved.

14. The method of claim 1, wherein the first zone comprises rotating finger paddles (58) configured to rotate in both forward and backwards directions.

15. The method of claim 14, wherein the first zone comprises rotating finger paddles configured to agitate the plurality of potato slices.

## Patentansprüche

1. Verfahren zur kontinuierlichen Herstellung von Kartoffelchips im Kessel-Stil in einer kontinuierlichen Fritteuse (35) ohne Rutsche, das die folgenden Schritte umfasst:
direktes Geben von mehreren Kartoffelscheiben nach dem Schneiden in einen vorgelagerten Abschnitt einer ersten Zone der kontinuierlichen Fritteuse in zufälliger Reihenfolge und bei einer Anfangsöltemperatur zwischen 135 °C und 148 °C, wobei der kontinuierliche Fritteuse (35) eine einzige, kontinuierliche Mehrzonenfritteuse mit einer gleichbleibenden und einzigen Öltiefe ist und wobei ein Ölkühler (57) Öl aus mehreren Ablässen (45, 49, 53) in der ganzen kontinuierlichen Fritteuse (35) zum Steuern der Temperatur der ersten Zone zieht;
Frittieren der Kartoffelscheiben in der ersten Zone für zwischen 1 und 3 Minuten vor einem Leiten in eine zweite Zone der kontinuierlichen Fritteuse (35), wobei die erste Zone eine Austrittsöltemperatur der ersten Zone zwischen 110 °C und 122 °C umfasst;
Spritzen von erhitztem Öl in die zweite Zone, die zu der ersten Zone der kontinuierlichen Fritteuse (35) nachgelagert ist, und Frittieren der Kartoffelscheiben innerhalb der zweiten Zone mit bei einer Temperatur der zweiten Zone zwischen 130 °C und 150 °C für 2 bis 4 Minuten, bevor die Kartoffelscheiben nachgelagert zu der zweiten Zone in eine dritte Zone der kontinuierlichen Fritteuse (35) geleitet werden; und
Spritzen von erhitztem Öl in die dritte Zone, die nachgelagert zu der zweiten Zone ist, und Frittieren der Kartoffelscheiben in der dritten Zone unter einem Eintaucher (61) bei einer Temperatur zwischen 140 °C und 160 °C, bis ein Austrittsfeuchtigkeitsgehalt der Kartoffelscheiben von 1,0 % bis 2,0 % erreicht ist.

2. Verfahren nach Anspruch 1, wobei das Heizöl der dritten Zone aus der kontinuierlichen Fritteuse (35) bei einer Austrittstemperatur der dritten Zone zwischen 145 °C und 150 °C austritt.

3. Verfahren nach Anspruch 1, umfassend eine Temperatur der zweiten Zone von 140 °C.

4. Verfahren nach Anspruch 1, wobei der Ölkühler (57) Öl aus einem nachgelagerten Ende der dritten Zone und einem Ablass (49) der zweiten Zone zieht, um ein kombiniertes gekühltes Öl herzustellen, und wobei das kombinierte gekühlte Öl mit einem Ölstrom von einem nachgelagerten Ende eines Ablasses (37) der ersten Zone kombiniert wird, bevor es zurück in den vorgelagerten Abschnitt der ersten Zone gespritzt wird, optional wobei der Ölkühler (57) Öl vor einer Kombination mit dem Ölstrom von dem nachgelagerten Ende des Ablasses (37) der ersten Zone aus einem zweiten Ablass (49) der zweiten Zone zieht, um das kombinierte gekühlte Öl herzustellen.

5. Verfahren nach Anspruch 1, wobei die Anfangsöltemperatur der ersten Zone aus einer Kombination von heißem Öl aus einem Fritteusenablass der kontinuierlichen Fritteuse (35) und heißem Öl aus einem Wärmetauscher resultiert.

6. Verfahren nach Anspruch 1, wobei die Anfangsöltemperatur der ersten Zone 139 °C ist.

7. Verfahren nach Anspruch 1, wobei die Austrittsöltemperatur der ersten Zone zwischen 114 °C und 122 °C liegt, optional wobei die Austrittsöltemperatur der ersten Zone 116 °C ist.

8. Verfahren nach Anspruch 1, wobei die Kartoffelscheiben in der ersten Zone für einen Zeitraum zwischen 1 und 1,5 Minuten frittiert werden.

9. Verfahren nach Anspruch 1, wobei Öl aus einer Austrittsöffnung der zweiten Zone abgezogen wird und heißes Öl entlang einer Eintrittsöffnung in die zweite Zone der kontinuierlichen Fritteuse (35) eingebracht wird.

10. Verfahren nach Anspruch 1, wobei die Kartoffelscheiben innerhalb der zweiten Zone für zwischen 2 und 2,5 Minuten frittieren.

11. Verfahren nach Anspruch 1, wobei die Kartoffelscheiben innerhalb der dritten Zone für zwischen 1,5 und 4,0 Minuten, optional 1,5 Minuten und 2,5 Minuten frittieren.

12. Verfahren nach Anspruch 1, wobei die Gesamtverweilzeit der Kartoffelscheiben in der kontinuierlichen Fritteuse 7,0 Minuten, optional 8,0 Minuten, weiter optional 9,0 Minuten, noch weiter optional 10,0 bis 11,0 Minuten ist.

13. Verfahren nach Anspruch 1, wobei ein Austrittsfeuchtigkeitsgehalt der Kartoffelscheiben von 1,5 % erreicht wird.

14. Verfahren nach Anspruch 1, wobei die erste Zone sich drehende Fingerpaddel (58) umfasst, die dazu konfiguriert sind, sich in sowohl einer Vorwärts- als auch einer Rückwärtsrichtung zu drehen.

15. Verfahren nach Anspruch 14, wobei die erste Zone sich drehende Fingerpaddel umfasst, die dazu konfiguriert sind, die mehreren Kartoffelscheiben zu bewegen.

## Revendications

1. Procédé pour fabriquer en continu des chips de pommes de terre de fabrication artisanale dans une friteuse continue (35) sans déversoir, comprenant les étapes consistant à :
placer une pluralité de tranches de pommes de terre directement après les avoir découpées dans une partie amont d'une première zone de la friteuse continue dans un ordre quelconque et à une température initiale de l'huile comprise entre 135 °C et 148 °C, dans lequel la friteuse continue (35) est une friteuse simple, continue, multizone ayant une profondeur d'huile consistante et unique, et dans lequel un refroidisseur d'huile (57) extrait de l'huile de multiples sorties (45, 49, 53) situées dans la friteuse continue (35) pour contrôler la température de la première zone ;
faire frire les tranches de pommes de terre dans ladite première zone pendant 1 à 3 minutes avant de les transférer dans une deuxième zone de la friteuse continue (35), dans lequel la première zone comporte une température d'huile de sortie de la première zone comprise entre 110 °C et 122 °C ;
injecter de l'huile chaude dans la deuxième zone en aval de la première zone de la friteuse continue (35) et faire frire les tranches de pommes de terre dans la deuxième zone à une température de deuxième zone comprise entre 130 °C et 150 °C pendant 2 à 4 minutes avant de transférer les tranches de pommes de terre en aval de la deuxième zone dans une troisième zone de la friteuse continue (35) ; et
injecter de l'huile chaude dans la troisième zone en aval de la deuxième zone et faire frire les tranches de pomme de terre dans la troisième zone sous un immergeur (61) à une température comprise entre 140 °C et 160 °C jusqu'à ce que la teneur en humidité de sortie de tranches de pommes de terre atteigne les 1,0 % à 2,0 %.

2. Procédé selon la revendication 1, dans lequel l'huile de chauffage de la troisième zone sorte de la friteuse continue (35) à une température de sortie de la troisième zone comprise entre 145 °C et 150 °C.

3. Procédé selon la revendication 1, comprenant une température de deuxième zone de 140 °C.

4. Procédé selon la revendication 1, dans lequel le refroidisseur d'huile (57) extrait de l'huile d'une extrémité aval de la troisième zone et d'une sortie (49) de la deuxième zone pour obtenir un mélange d'huile refroidie et dans lequel le mélange d'huile refroidie est mélangé à un flux d'huile provenant de l'extrémité aval d'une sortie (37) de la première zone avant d'être de nouveau injecté dans la partie amont de la première zone, éventuellement dans lequel le refroidisseur d'huile (57) extrait de l'huile d'une deuxième sortie (49) de la deuxième zone pour obtenir le mélange d'huile refroidie avant de le mélanger au flux d'huile provenant de l'extrémité aval de la sortie (37) de la première zone.

5. Procédé selon la revendication 1, dans lequel la température initiale de l'huile de la première zone est le résultat d'un mélange d'huile chaude d'une sortie de friteuse de la friteuse continue (35) et d'huile chaude d'un échangeur thermique.

6. Procédé selon la revendication 1, dans lequel la température initiale de l'huile de la première zone est de 139 °C.

7. Procédé selon la revendication 1, dans lequel la température de l'huile de sortie de la première zone est comprise entre 114 °C et 122 °C, éventuellement dans lequel la température de l'huile de sortie de la première zone est de 116 °C.

8. Procédé selon la température 1, dans lequel les tranches de pommes de terre sont frites dans la première zone pendant un certain temps allant de 1 à 1,5 minutes.

9. Procédé selon la revendication 1, dans lequel l'huile est enlevée d'un port de sortie de la deuxième zone et de l'huile chaude est introduite le long d'un port d'entrée dans la deuxième zone de la friteuse continue (35).

10. Procédé selon la revendication 1, dans lequel les tranches de pommes de terre sont frites dans la deuxième zone pendant 2 à 2,5 minutes.

11. Procédé selon la revendication 1, dans lequel les tranches de pommes de terre sont frites dans la troisième zone pendant 1,5 à 4 minutes, éventuellement pendant 1,5 à 2,5 minutes.

12. Procédé selon la revendication 1, dans lequel le temps total de maintien des tranches de pommes de terre dans la friteuse continue est de 7 minutes, éventuellement de 8 minutes, en outre éventuellement de 9 minutes, encore en outre éventuellement de 10 à 11 minutes.

13. Procédé selon la revendication 1, dans lequel est atteinte une teneur en humidité de sortie des tranches de pommes de terre de 1,5 %.

14. Procédé selon la revendication 1, dans lequel la première zone comporte des moulinets manuels rotatifs (58) configurés pour tourner aussi bien dans le sens avant que dans le sens arrière.

15. Procédé selon la revendication 14, dans lequel la première zone comporte des moulinets manuels rotatifs configurés pour agiter la pluralité des tranches de pommes de terre.
